# EUROPÄISCHE PATENTANMELDUNG

(11) **EP 0 849 472 A1**
(43) Veröffentlichungstag der Anmeldung: **24.06.1998**
(21) Anmeldenummer: 97110485.6
(22) Anmeldetag: 25.06.1997
(51) Int. Cl.: F04D 25/04, F04D 29/28, B01D 1/28

(54) **Radialdampfmischmaschine**

(30) Priorität: 21.11.1996 PC /DE96/02224 T
(71) Anmelder: Guowen, Yuan, 70569 Stuttgart (DE)
(72) Erfinder: Zhongshan, Dadao, Wuhan 430030 (CN)

(57) **Zusammenfassung**

Radialdampfmischmaschine betrifft eine Maschine zum Komprimieren von Brueden durch das Mischen mit Hochdruckdampf.

Der Erfindung liegt das Problem zugrunde, die Energieeffizienz von konventionellen dampfbeheizten Verdampfungs- und Destillationsverfahren zu erhoehen.

Der Druck von Brueden wird in Radialdampfmischmachine zuerst von den Schaufeln (9) eines Rotors (8) und dann durch Mischen in Leitring (7) mit dem aus Duesen (14) gespruehten Frischdampf erhoeht werden. Die Duesen (14) sind an den Rotor (8) angeordnet. Der gespruehte Frischdampf kann nach Drallsatz ein Antriebsmoment fuer den Rotor (8) leisten. Dadurch kann die bei konventionellem Verdampfungsverfahren von Druckminderventil aufgewandte Energie posstiv benutzt werden.

Konventionelle dampfbeheizte Verdampfungs- und Destillationsverfahren koennen durch Einsatz der Radialdampfmischmaschine verbessert werden.

## Beschreibung

Die vorliegende Erfindung betrifft eine Maschine zum Komprimieren von Brueden durch das Mischen mit Hochdruckdampf.

In der chemischen- und Lebensmittelindustrie werden zahlreiche dampfbeheizte Verdampfer eingesetzt, z.B. bei der Meerwasser- und Abwasserentsalzung, in Zuckerfabriken Zellstofffabriken, bei der Milchkonzentration usw. Der Energieverbrauch von dampfbeheiztem Verdampfungsverfahren ist ziemlich hoch. Selbst der Energieverbrauch vom bei der Meerwasserentsalzung eingesetzten ME (Multi-Effect Evaporating) und MSF (Multi-Stage-Flash Evaporating) Verfahren betraegt 210-300 MJ pro Tonne Produktionswasser.

Es ist bekannt, effektive Massnahme zur Verbesserung der thermischen Effizienz der Verdampfer ist, dass der aus einem Verdampfer entstandene Brueden wieder komprimiert und zur Beheizung im selben Verdampfer benutzt wird. Dazu werden Dampfstrahlpumpen und Turbokompressoren verwendet. Dampfstrahlpumpe wird wegen seiner niedrigen thermischen Effizienz (400-500MJ/Tonne Produktionswasser in Meerwasserentsalzung) nur fuer kleinere Mengeleistung benutzt. Der Energieverbrauch kann bei Einsatz eines Turbokompressors im Verdampfungsverfahren betraechtlich reduziert wird (150-180MJ/Tonne Produktionswasser in Meerwasserentsalzung), aber nachteilig verbraucht es nur elektrische oder mechanische Energie. Da elektrische Energie gegenueber thermisher Energie sehr teuer ist, werden die Produktionskosten bei dem Verfahren im allgemeinen gesteigert.

Der in der Patentansprueche angegebenen Erfindung liegt das Problem zugrunde, Energieverbrauch von dampfbeheizten Verdampfungsverfahren fuer einheitliche Produktion um 30 bis 60% zu reduzieren, und mehr als 70% Energieverbrauch thermische Energie zu sein.

Dieses Problem wird durch Einsatz der in der Patentansprueche aufgefuehrten Radialdampfmischmaschine zur Verbesserung des konventionellen Verdampfungsverfahrens geloest.

Beim konventionellen dampfbeheizten Verdampfungsverfahren wird der Druck des Frischdampfs vor seinem Eintritt in Verdampfer durch ein Druckminderventil reduziert.

Dagegen bei neuem Verfahren strahlt Frischdampf von hoeherem Druck durch Duesen aus einem drehenden Rotor aus, und mischt mit dem von Schaufeln eines Laufrades beschleunigten Brueden, dadurch kann die von Druckminderventil aufgewandte Energie possitiv benutzt werden, um den Druck des Bruedens zu erhoehen. Fuer Brueden funktioniert die Radialdampfmischmaschine wie ein Verdichter und fuer Hochdruckdampf funktioniert sie wie ein Druckminderventil.

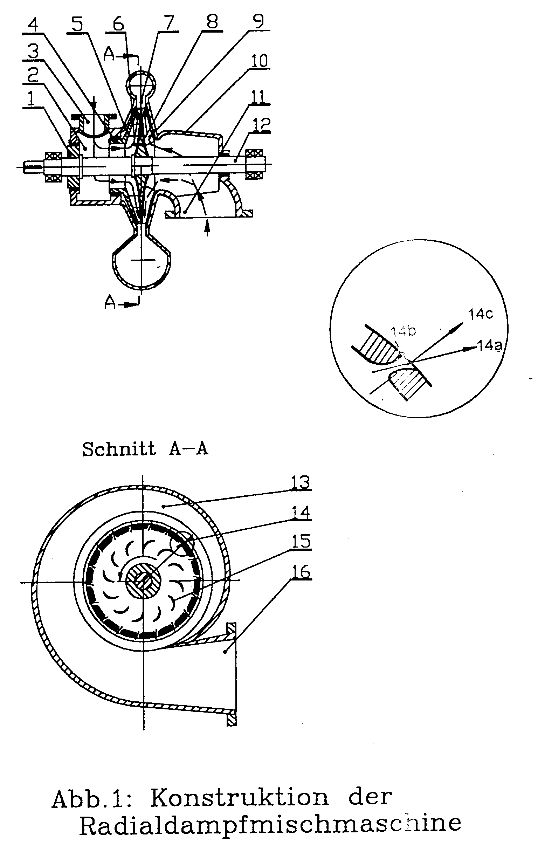

In Abb.1 ist die Konstruktion von Radialdampfmischmaschine dargestellt. Die Maschine besteht hauptsaechlich aus einem Gehaeuse und einem beiderseitig von Lagern gefuehrten Rotor.

Der Rotor besteht aus einem Laufrad (8 in Abb.1) mit Schaufeln (9 in Abb. 1), einer Antriebsachse (12 in Abb. 1), einem tellerfoermigen Mantel (5 in Abb. 1) und einem Drehrohr (4 in Abb. 1). An das linke Ende der Antriebsachse ist eine runde Platte (1 in Abb. 1) zum Balancieren der durch die Druckdifferenz des Dampfes im Hoch- und Niederdruckdampfraum (2 und 10 in Abb.1) verursachten axialen Kraft angeordnet. Die runde Platte ist gegen das Gehaeuse abgedichtet. Die Schaufeln sind an die rechte Seite des Laufrades gleichmaessig angeordnet. Zwei benachbarte Schaufeln bilden sich eine Kanal, deren Ausgang an den aeueseren Rand des Rotors geoeffnt ist. Das Drehrohr ist der Antriebsachse konzentrisch an den tellerfoermigen Mantel angeschlossen und gegen das Gehaeuse abgedichtet. Der tellerfoermige Mantel ist an die linke Seite des Laufrades angeordnet. Der Mantel und das Laufrad sind von Bogenplatten (15 in Abb.1) verstaerkt. Ein Drehraum (6 in Abb.1) fuer Hochdruckdampf ist zwischen dem Mantel und Laufrad gebildet. An den aeusseren Rand des Drehraums ist eine Reihe Duese (14 in Abb.1 und einzelne Vergroesserung in Abb.1) entlang dem Umfang gleichmaessig geoeffnet. Die Ausgaenge der Duesen und die Ausgaenge der von den Schaufeln gebildeten Kaenale sind in der axialen Richtung am aeusseren Rand des Rotors benachbart und radial auf den Leitring (7 in Abb.1) richten. Der Winkel zwischen der Mittellinie der Duese (die Richtung des Vektors 14a in Abb.1) und der Richtung der Umfanggeschwindigkeit des Rotors (die Richtung des Vektors 14b in Abb.1) ist im allgemeinen groesser als 90°. An die linke Seite des Laufrades ist Waermeisolationsstoff beschmiert.

Das Gehaeuse ist von dem Rotor in drei Raeume: Spiralgehaeuse (13 in Abb.1) mit dem Leitring (7 in Abb.1), Hochdruckdampfraum (2 in Abb.1) neben der linken Seite des Rotors, Niederdruckdampfraum (10 in Abb.1) neben der rechten Seite des Rotors, abgeteilt ist. An das Spiralgehaeuse ist Mischdampfablauf(16 in Abb.1), an den Hochdruckdampfraum ist Hochdruckdampfzulauf (3 in Abb.1) und an den Niederdruckdampfraum ist Niederdruckdampfzulauf (11 in Abb.1) angeschlossen. Der aeussere Rand des Rotors liegt in der radialen Richtung dem Leitring des Gehaeuses gegenueber.

Bei der Setzung einer Radialdampfmischmaschine in Betrieb ist der aus einem Verdampfer entweichende Brueden zu dem Niederdruckdampfzulauf und der Frischdampf von hoeherem Druck und hoeherer Temperatur aus einem Dampfkessel zu dem Hochdruckdamplzulauf geleitet. Wenn der von Motor angetriebe Rotor eine Bewegung entgegen der Uhrzeigerrichtung (s. Schnitt A-A in Abb.1) ausfuehrt, wird der Brueden durch die Schaufeln aus Niederdruckzulauf in die Radialdampfmischmaschine angesaugt und beschleunigt, dann stroemt er aus dem Rotor in den Leitring. Gleichzeitig tritt der Frischdampf durch den Hochdruckdampfzulauf, den Hochdruckdampfraum und das Drehrohr in den Drehraum ein, dann ist er mit Hochgeschwindigkeit (14a in Abb.1 bezeichnet die Richtung der relativen Geschwindigkeit des gespruehten Dampfes) durch die Duesen in den Leitring gesprueht, wo der Frischdampfmit dem aus dem Niederdruckdampfzulauf kommenden Brueden zusammen mischt, wobei der Brueden durch den Frischdampf nochmals beschleunigt wird. Der Frischdampf kann bei seiner Strahlung nach Drallsatz ein Antriebsmoment fuer den Rotor leisten. Die relative Geschwindigkeit des gespruehten Dampfes (14a in Abb.1) kann in radiale Geschwindigkeit (14c in Abb.1) und tangentiale Geschwindigkeit (ihre Richtung ist entgegen 14b in Abb.1) zerlegt werden. Die radiale Geschwindigkeit ist zur Beschleunigung des Bruedens und die tangentiale Geschwindigkeit ist zur Leistung des Antriebsmomentes benutzt.

Der Druck des Mischdampfes wird durch die Verzuegerung im Spiralgehaeuse (oder anderen Leitvorrichtungen) erhoeht und tritt durch Mischdampfablauf von Radialdampfmischmaschine aus. Der Mischdampf ist zur Beheizung in Verdampfer benutzt.

Im Vergleich mit Turbokompressor besetzt die Erfindung folgende Vorteile:
1. Da die Erhoehung von Bruedendruck bei Radialdampfmischmaschine hauptsaechlich durch die Expansion von Hochdruckdampf verwirklicht ist, kann Radialdampfmischmaschine um ca. 70% wenigere elektrische oder mechanische Energie verbrauchen.
2. Beim gleichen Foerderstrom und gleichen Ein- und Austrittdruck von Brueden ist die Konstruktion der Radialdampfmischmaschine sehr simpeler als Turbokompressor.
3. Mit Hilfe von Radialdampfmischmaschine kann dampfbeheiztes Verdampfungsverfahren verbessert werden, damit der Energieverbrauch um 30% bis 60% reduziert werden kann.

Radialdampfmischmaschine kann auch zum Verbesserung von konventionellem Destillationsverfahren benutzt werden, damit der Energieverbrauch um ca. 30% und Wasserverbrauch fuer Kondensation um mehr als 50% abgenommen wird.

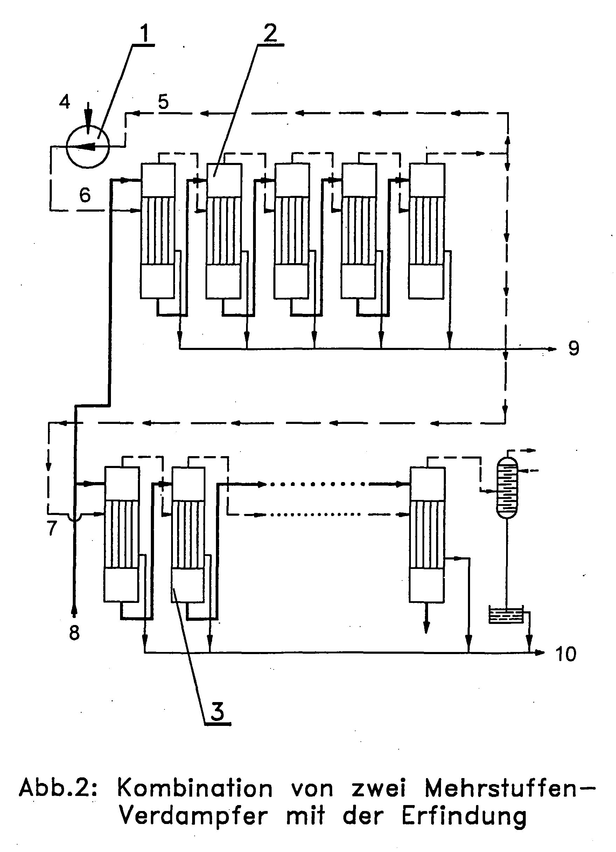

In Abb.2 ist z.B. das durch die Erfindung verbesserte Verdampfungsverfahren fuer Meerwasserentsalzung dargestellt. Dabei bedeuten 4 in Abb.2 Frischdampf: 5 und 7 in Abb.2 der aus erster mehrstufiger Verdampferanlage (MSF oder ME) entweichende Bruden; 6 in Abb.2 Mischdampf; 8 in Abb.2 Meerwasser; 9 und 10 in Abb.2 Trinkwasser. 1 in Abb.2 ist Radialdampfmischmaschine. 2 in Abb.2 ist erste mehrstufige (MSF oder ME) und 3 in Abb.2 ist zweite mehrstufige Verdampferanlage (MSF oder ME). Mit dem in Abb.2 angeschaulichten neuen Verfahren kann der Energieverbrauch auf ca. 140 MJ/Tonne Trinkwasser abgenommen werden, und davon mehr als 70% ist thermische Energie.

## Patentansprüche

1. Mechanisch betriebene und hauptsaechlich aus Gehaeuse und Rotor bestehende Dampfmischmaschine zum Komprimieren von Brueden bei Verdampfungs- und Destillationsverfahren, dadurch gekennzeichnet, dass der Rotor, der beiderseitig von Lagern gestuetzt ist, hauptsaechlich aus Laufrad, Schaufeln, Drehrohr, tellerfoermigem Mantel und Antriebsachse besteht; und dass die Schaufeln an eine Seite des Laufrades gleichmaessig angeordnet sind und der tellerfoermige Mantel an andere Seite des Laufrades angeordnet ist; und dass zwischen dem Mantel und Laufrad eine Reihe Duese fuer Dampfstrahlung an den aeusseren Rand des Rotors geoeffnet ist; und dass das Gellaeuse durch den Rotor in drei Raeume (Spiralgehaeuse mit dem Leitring, Hochdruckdampfraum neben dem tellerfoermigen Mantel, Niederdruckdampfraum neben der Schaufeln) abgeteilt ist; und dass an das Spiralgehaeuse Mischdampfablauf, an den Hochdruckdampfrarnm Hochdruckdampfzulauf und an den Niederdruckdampfraum Niederdruckdampfzulauf angeschlossen sind; und dass der aeussere Rand des Rotors radial dem Leitring des Gehaeuses gegenueberliegt.

2. An das Laufrad angeordneter tellerfoermiger Mantel nach Anspruch 1, dadurch gekennzeichnet, dass ein Drehraum für Hochdruckdampf zwischen dem tellerfoermigen Mantel und Laufrad gebildet ist.

3. Drehrohr nach Anspruch 1, dadurch gekennzeichnet, dass der Hochdruckdampfraum und der in Aspruch 2 genannte Drehraum durch das an den tellerfoermigen Mantel angeordneten Drehrohr, das der Antriebsachse des Rotors konzentrisch und gegen das Gehaeuse abgedichtet ist, miteinander angeschlossen sind.

4. Schaufeln nach Anspruch 1, dadurch gekennzeichnet, dass zwischen zwei benachbarten Schaufeln ein Kanal, dessen Ausgang an den aeusseren Rand des Rotors angeordnet ist, gebildet ist.

5. Eine Reihe Duese nach Anspruch 1, dadurch gekennzeichnet, dass die Duesen, deren Ausgaenge und der Ausgaenge der in Anspruch 4 genannten Kaenale in der axialen Richtung miteinander benachbart sind, an den aeusseren Rand des in Anspruch 2 genannten Drehraums gleichmaessig geoeffnet sind, die Ausgaenge der Duesen und Kaenale in der radialen Richtung auf den Leitring richtet sind
